# EUROPEAN PATENT SPECIFICATION

(11) **EP 2 953 181 B1**
(45) Date of publication and mention of the grant of the patent: **25.01.2017**
(21) Application number: 13874166.5
(22) Date of filing: 30.08.2013
(51) Int. Cl.: H01M 2/20, H01M 2/34, H01M 10/48, H01G 2/04, H01M 2/10, H01M 2/30

(54) **WIRING MODULE**
VERKABELUNGSMODUL
MODULE DE CÂBLAGE

(30) Priority: 01.02.2013 JP 2013018327
(43) Date of publication of application: 09.12.2015
(73) Proprietor: AutoNetworks Technologies, Ltd., Yokkaichi-shi, Mie 510-8503 (JP); Sumitomo Wiring Systems, Ltd., Yokkaichi-shi, Mie-ken 510-8503 (JP); Sumitomo Electric Industries, Ltd., Osaka-shi, Osaka 541-0041 (JP)
(72) Inventor: NAKAYAMA Osamu, Yokkaichi-shi Mie 510-8503 (JP); MORITA Mitsutoshi, Yokkaichi-shi Mie 510-8503 (JP)
(74) Representative: Horn Kleimann Waitzhofer Patentanwälte PartG mbB
(86) International application number: PCT/JP2013/073273
(87) International publication number: WO 2014/119034

(56) References cited:
- EP-A1- 2 546 906
- JP-A- 2009 541 922
- JP-A- 2012 134 016
- JP-A- 2012 138 268
- US-A1- 2003 077 485

## Description

### Technical Field

The present invention relates to a wiring module to be attached to an electricity storage element group obtained by lining up a plurality of electricity storage elements.

### Background Art

In general, electricity storage modules to be mounted in electric cars and hybrid cars, for example, are configured by electrically connecting a large number of electricity storage elements via bus bars.

Such electricity storage modules include a terminal for detecting a state (e.g., voltage or temperature) of an electricity storage element group and an electric wire for connecting this terminal and a controller such as an ECU, for example (see Patent Document 1, for example).

### Citation List

### Patent Documents

Patent Document 1: JP 2011-91003A
Patent Document 2 : EP 2 546 906 A1 discloses a battery module including a plurality of connecting members electrically connecting electric terminals of adjacent electric cells and a flexible flat cable formed by flatly encapsulating an outer circumference of a flat conductor with an insulating resin and joining the plurality of connecting members. Portions of the flexible flat cable to be disposed between adjacent connecting members are provided with folded portions formed by folding the flexible flat cable at folded lines. The folded lines extend in a direction crossing a longitudinal direction of the flexible flat cable.

### Summary of the Invention

### Technical Problem

In Patent Document 1 above, a detection terminal to which an electric wire is crimped is bolted to an electrode terminal together with a bus bar that connects electricity storage elements, and is thereby electrically connected to a controller, such as an ECU, for controlling the electricity storage elements via the electric wire.

Incidentally, as a method for connecting the detection terminal and the electricity storage element, in addition to bolting the electricity storage element to the electrode terminal, the detection terminal may be disposed in a connector, and the connector may be used to electrically connect the detection terminal and the electricity storage element.

However, in the case where a plurality of connectors are used in the electricity storage element group including a plurality of electricity storage elements, it takes much time to confirm that all the connectors are completely connected.

The present invention was made based on the foregoing circumstances, and it is an object thereof to provide a technique capable of easily detecting a state in which the connector and the electricity storage element are incompletely connected.

### Solution to Problem

Disclosed is a wiring module with the features of claim 1. Described is a wiring module to be attached to an electricity storage element group obtained by lining up a plurality of electricity storage elements, the wiring module including a connector including a detection terminal to be connected to the electricity storage element and to detect a state of the electricity storage element, a resin protector for accommodating the connector in a connecting position in which the detection terminal and the electricity storage element are connected to each other, and a cover that is attached to the resin protector to cover the connector and that includes a connection detection portion that does not interfere with the connector in a state in which the connector is accommodated in the connecting position and that interferes with the connector in a state in which the connector is not accommodated in the connecting position.

With the present invention, in the case where the connector is not accommodated in the connecting position, the connection detection portion interferes with the connector, thus making it possible to detect a state in which the connector and the electricity storage element are incompletely connected.

The following aspects are preferable for embodiments of the present invention. The resin protector includes a cover lock portion and the cover includes a cover lock-receiving portion that is elastically locked to the cover lock portion, and the connection detection portion allows the cover lock portion and the cover lock-receiving portion to be locked to each other by not interfering with the connector in a state in which the connector is accommodated in the connecting position, and does not allow the cover lock portion and the cover lock-receiving portion to be locked to each other by interfering with the connector in a state in which the connector is not accommodated in the connecting position.

With the above aspect, it is possible to reliably detect the state in which the connector and the electricity storage element are incompletely connected due to the cover locking portion and the lock-receiving portion not being locked to each other.

It is preferable that the connection detection portion is formed so as to project toward the connector at a position corresponding to the connector.

With the above configuration, the connection detection portion reliably interferes with the connector in the state in which the connector and the electricity storage element are incompletely connected to each other. This makes it possible to reliably detect the state in which the connector and the electricity storage element are incompletely connected to each other.

It is preferable that the connector can be accommodated in the resin protector in a non-connecting position in which the detection terminal and the electricity storage element are separated.

With the above aspect, the connector is first accommodated in the resin protector in the non-connecting position. Next, the wiring module is attached to a single cell group. Thereafter, the connector and the electricity storage element are connected to each other by accommodating the connector in the connecting position. In this manner, with this aspect, the connector can be accommodated in the resin protector in the non-connecting position in a state before the resin protector is attached to the single cell group, thus making it possible to enhance the efficiency of operations for attaching the wiring module to the single cell group compared with a case where the connector is not accommodated in the resin protector.

It is preferable that the connection detection portion is formed in one piece with the cover.

With the above aspect, the number of parts of the wiring module can be reduced.

It is preferable that the detection terminal is configured to detect a voltage of the electricity storage element.

With the above aspect, the detection terminal can be used to detect the voltage of the electricity storage element.

It is preferable that the electricity storage element has electrode terminals, and a bus bar for connecting the electrode terminal of one electricity storage element and the electrode terminal of another electricity storage element is accommodated in the resin protector.

With the above aspect, it is possible to electrically connect a plurality of electricity storage elements by attaching the wiring module to the electricity storage element group.

It is preferable that the resin protector is provided with a dislodgment preventing portion that accommodates the connector in a state in which the dislodgment of the connector is prevented.

With the above aspect, it is possible to hold the connector in a state in which the dislodgment of the connector is prevented in the case where the connector is accommodated at a position different from the connecting position.

### Advantageous Effects of the Invention

With the present invention, it is possible to easily detect a state in which a connector and an electricity storage element are incompletely connected to each other.

### Brief Description of Drawings

FIG. 1 is a plan view of an electricity storage element group according to Embodiment 1 of the present invention.
FIG. 2 is a plan view of an electricity storage module.
FIG. 3 is a side view of the electricity storage element.
FIG. 4 is a plan view of a wiring module.
FIG. 5 is a cross-sectional view of the electricity storage module in a state before a cover is attached, taken along line V-V in FIG. 4.
FIG. 6 is a cross-sectional view illustrating a state in which a connection detection portion interferes with a connector.
FIG. 7 is a plan view of the cover.
FIG. 8 is a cross-sectional view of the electricity storage module.
FIG. 9 is a cross-sectional view illustrating a step of inserting a cover locking portion into a through hole of the cover.
FIG. 10 is a cross-sectional view illustrating a step of engaging the cover lock portion with a cover lock-receiving portion.

### Description of Embodiments

### Embodiment 1

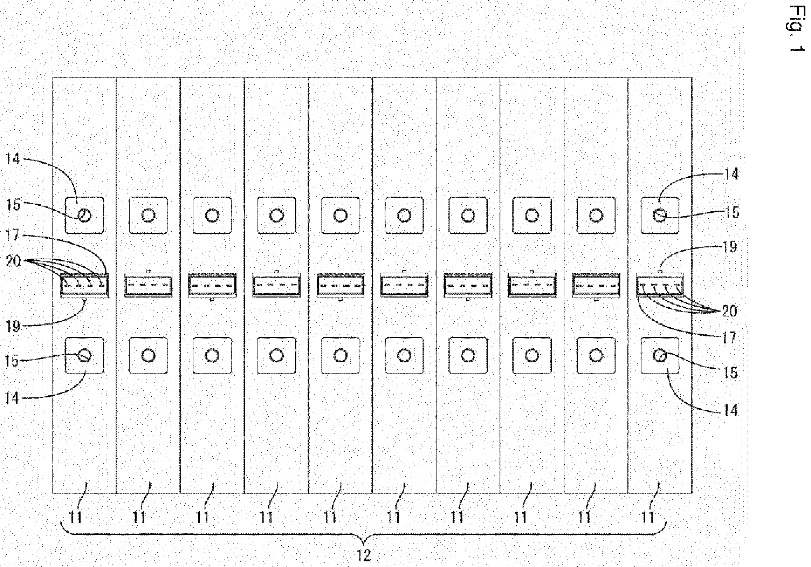

Embodiment 1 of the present invention will be described with reference to FIGS. 1 to 10. An electricity storage module 10 according to this embodiment is mounted in a vehicle (not shown) such as an electric car or a hybrid car, and is used as a power source for driving the vehicle.

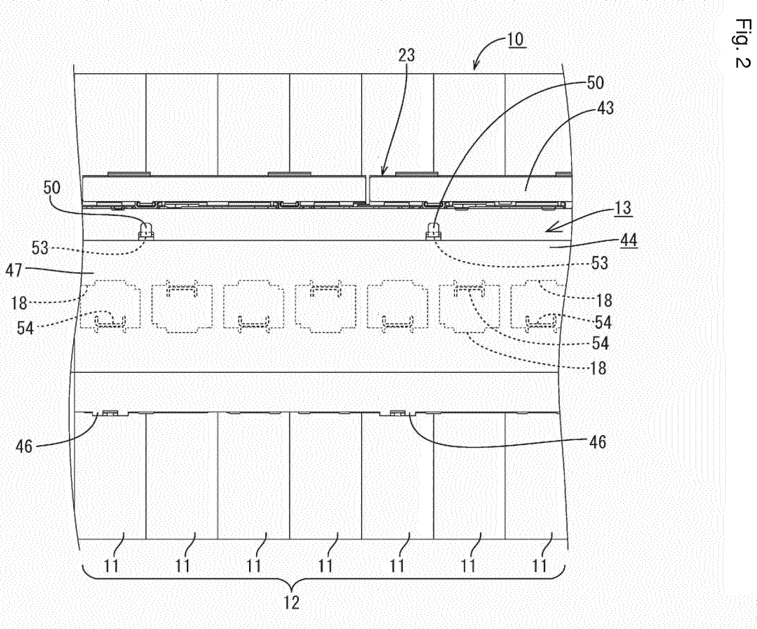

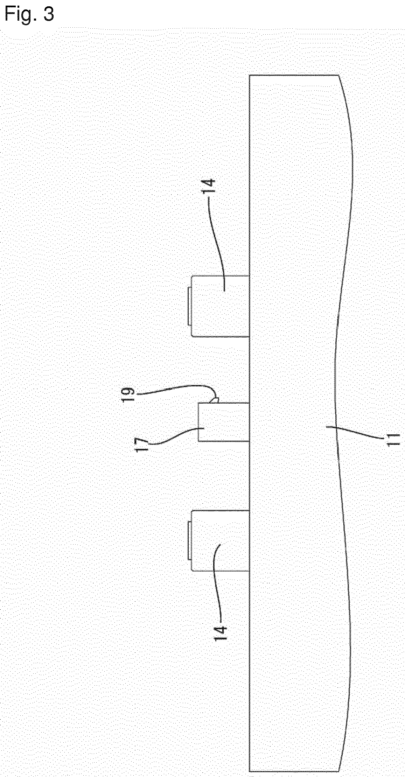

The electricity storage module 10 has an electricity storage element group 12 obtained by lining up a plurality of (ten in this embodiment) electricity storage elements 11 (see FIG. 1), and a wiring module 13 is attached to the electricity storage element group 12 (see FIG. 2). In the following description, regarding a plurality of identical members, there is a case where one of the members is denoted by a reference numeral, and the other members are not denoted by the reference numeral. Moreover, in the following description, the upper side of the FIG. 3 is referred to as "upper side", and the lower side thereof is referred to as "lower side". Furthermore, the left side of FIG. 3 is referred to as "left side", and the right side thereof is referred to as "right side".

### Electricity storage element 11

As shown in FIG. 1, the electricity storage elements 11 each have a flattened and substantially rectangular parallelepiped shape. As shown in FIG. 3, a pair of electrode terminals 14 is formed so as to project from the upper surface of the electricity storage element 11. One of the pair of electrode terminals 14 is a positive electrode, and the other is a negative electrode. Both of the pair of electrode terminals 14 have the same shape and the same size. A bolt hole 15 that extends downward is formed in the upper surface of each of the electrode terminals 14. A screw thread is formed inside the bolt hole 15, and a bolt 16 is screwed thereon. The plurality of electricity storage elements 11 are disposed such that the polarities of the adjacent electrode terminals 14 are different. The electricity storage element 11 according to this embodiment is a storage battery and a plurality of (four in this embodiment) single cells (not shown) are accommodated thereinside in a state in which the single cells are electrically connected.

As shown in FIGS. 1 and 3, a tubular hood portion 17 that is open upward is provided between the pair of electrode terminals 14. A connector lock portion 19 that is locked to a connector 18 projects from the outer wall of the hood portion 17.

As shown in FIG. 1, four voltage output terminals 20 are disposed inside the hood portion 17, projecting toward the inside of the hood portion 17. The voltage output terminals 20 are respectively electrically connected to the single cells accommodated in the electricity storage element 11. The voltage output terminals 20 are each electrically connected to a detection terminal 21 accommodated in the connector 18.

### Wiring module 13

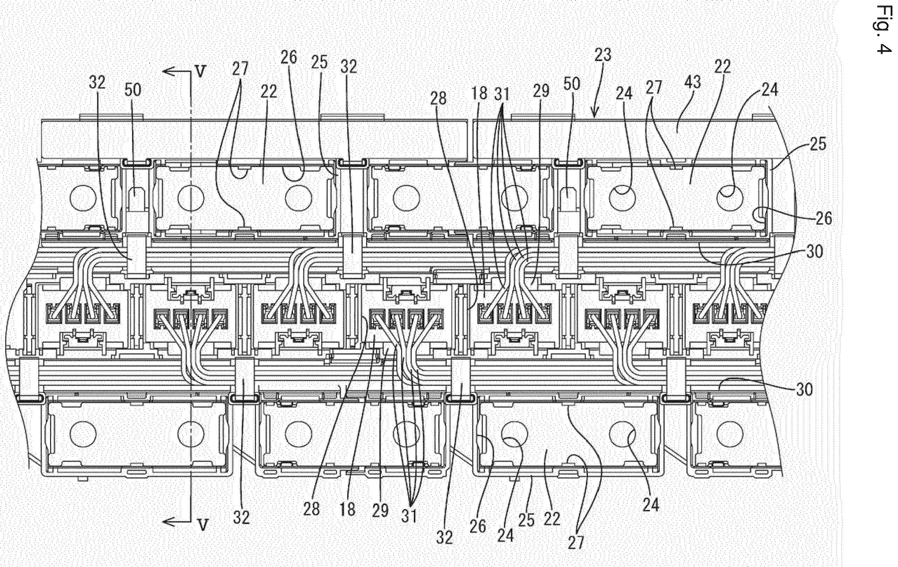

As shown in FIG. 4, the wiring module 13 includes a plurality of bus bars 22 that are made of metal and are connected to the positive electrode terminal 14 and the negative electrode terminal 14 of the adjacent electricity storage elements 11, and a resin protector 23 that is made of a synthetic resin and accommodates the bus bars 22.

### Bus bar 22

The bus bars 22 are each formed by pressing a plate made of metal such as copper, copper alloy, stainless steel (SUS), aluminum, or aluminum alloy into a predetermined shape, and have a substantially rectangular shape as a whole. The surface of the bus bar 22 may be plated with metal such as tin or nickel. A pair of insertion holes 24 into which the bolts 16 are inserted is formed through each of the bus bars 22. The insertion holes 24 each have a substantially circular shape as viewed from above.

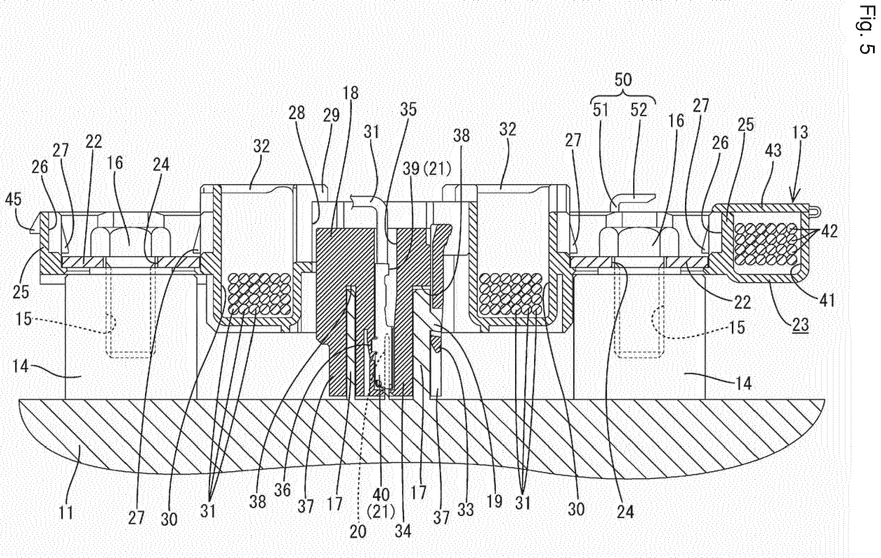

As shown in FIG. 5, the inner diameter of each insertion hole 24 is set to be slightly larger than the inner hole of the bolt hole 15 of the electrode terminal 14. The bolt 16 is inserted into the insertion hole 24 and is screwed into the bolt hole 15 of the electrode terminal 14, and the bus bar 22 is thereby sandwiched between the head of the bolt 16 and the electrode terminal 14, thus electrically connecting the electrode terminal 14 and the bus bar 22.

### Resin protector 23

The resin protector 23 is obtained by coupling a plurality of coupling units, and has an elongate shape extending in the direction in which the electricity storage elements 11 are lined up (left-right direction in FIG. 4) as shown in FIG. 4.

A plurality of bus bar accommodating portions 25 for accommodating the bus bars 22 are formed in the resin protector 23 so as to be lined up in the longitudinal direction of the resin protector 23. The plurality of bus bar accommodating portions 25 are provided so as to be lined up in two rows. An opening 26 that is open upward (i.e., toward a side opposite to the electricity storage element 11) is provided in the upper surface (i.e., side surface on a side opposite to the electricity storage element 11) of each bus bar accommodating portion 25. A plurality of bus bar locking claws 27 that project toward the inside and prevent the bus bars 22 from dislodging upward are formed on the inner surface of each bus bar accommodating portion 25.

A plurality of connector accommodating portions 28 are provided between the two rows of the bus bar accommodating portions 25 so as to be lined up in the longitudinal direction of the resin protector 23. The connectors 18 are accommodated in the connector accommodating portions 28. The connector accommodating portions 28 each have a shape extending along the outer perimeter of the connector 18. A dislodgment preventing portion 29 for suppressing the upward dislodgment of the connector 18 held in the connector accommodating portion 28 is formed at the upper end portion of each connector accommodating portion 28.

Electric wire accommodating grooves 30 are provided between the connector accommodating portions 28 and the bus bar accommodating portions 25. In this embodiment, the electric wire accommodating grooves 30 are provided on the left side and the right side of the connector accommodating portions 28. A plurality of electric wires 31 are accommodated in each electric wire accommodating groove 30. The electric wires 31 are guided out from the connectors 18 held in the connector accommodating portions 28. Electric wire holding portions 32 for restricting the protrusions of the electric wires 31 from the electric wire accommodating grooves 30 are provided at the upper edges of the side walls of the electric wire accommodating grooves 30 so as to bridge one side wall and the other side wall. The electric wire holding portions 32 are each provided so as to be located between the adjacent bus bar accommodating portions 25.

### Connector 18

The connectors 18 to be held in the connector accommodating portions 28 are each made of a synthetic resin and have a substantially rectangular parallelepiped shape. Each connector 18 is provided with a connector lock-receiving portion 33 that is locked to the connector lock portion 19 formed in the hood portion 17. Moreover, four detection terminals 21 are accommodated in the connector 18.

As shown in FIG. 5, the connector 18 includes a tower portion 34 for accommodating the detection terminals 21. A plurality of cavities 35 are formed side-by-side in the tower portion 34, and the detection terminals 21 are accommodated in the cavities 35. A lance 36 that projects toward the inside and that can be bent and deformed is formed in each cavity 35. The lance 36 is elastically engaged with the detection terminal 21, thus suppressing the dislodgment of the detection terminal 21 from the cavity 35.

A covering wall 37 is formed in the connector 18 so as to surround the outer perimeter of the tower portion 34. The tower portion 34 is fitted to the inside of the hood portion 17. A gap 38 that receives the hood portion 17 is formed between the tower portion 34 and the covering wall 37.

The detection terminals 21 accommodated in the connector 18 are so-called female-type detection terminals 21. A barrel portion 39 to which the electric wire 31 is connected is formed at the upper end portion of the detection terminal 21, and a connecting tubular portion 40 that has a tubular shape and that can be connected to the voltage output terminal 20 of the single cell is formed at the lower end portion thereof.

The barrel portion 39 is crimped to the end portion of the electric wire 31, and thus the electric wire 31 and the detection terminal 21 are electrically connected to each other. Moreover, an elastic contact piece (not shown) is formed inside the connecting tubular portion 40. The elastic contact piece comes into contact with the voltage output terminal 20, and thus the single cell and the detection terminal 21 of the connector 18 are electrically connected to each other.

The detection terminal 21 detects a state of the single cell accommodated in the electricity storage element 11. In this embodiment, the detection terminal 21 detects the voltage of the single cell. The electric wire 31 connected to the detection terminal 21 is guided out from the upper surface of the connector 18 to the outside, and is connected to a control unit (not shown) such as an ECU. The electric wire 31 is guided to a lateral edge of the connector 18 on a side opposite to the lateral edge at which the connector lock-receiving portion 33 is formed, and is disposed in the electric wire accommodating groove 30 provided on a side opposite to the connector lock-receiving portion 33.

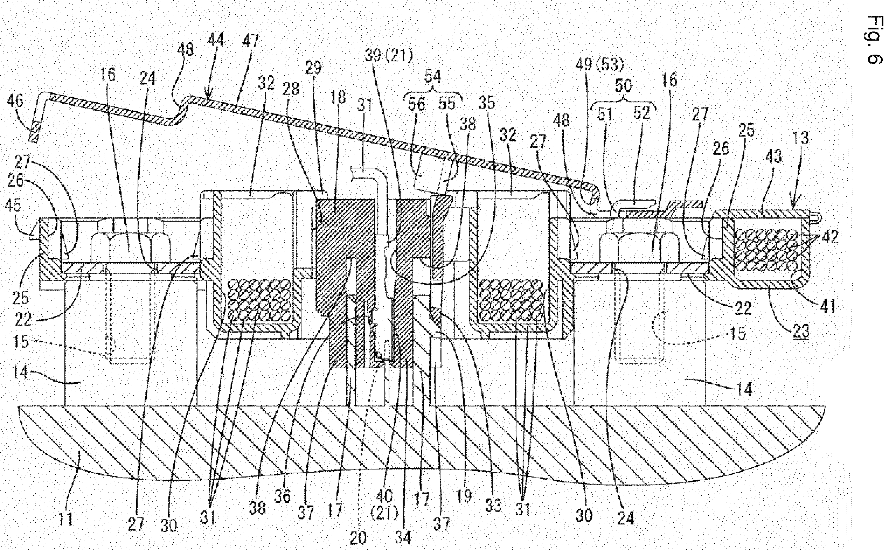

The connector 18 is accommodated in the connector accommodating portion 28 of the resin protector 23 so as to be capable of moving in the vertical direction. Specifically, the connector 18 is accommodated in the connector accommodating portion 28 so as to be capable of moving from the non-connecting position (e.g., the position shown in FIG. 6) in which the connector 18 is not connected to the voltage output terminal 20 to the connecting position (the position shown in FIG. 5) in which the connector 18 electrically connects the detection terminal 21 and the voltage output terminal 20 and is locked to the electricity storage element 11. In the non-connecting position, the detection terminal 21 and the voltage output terminal 20 are not in contact with each other in a state in which the connector 18 is held so as not to dislodge from the resin protector 23. In the connecting position, the detection terminal 21 and the voltage output terminal 20 are in contact with each other, and the connector lock portion 19 of the electricity storage element 11 is elastically locked to the connector lock-receiving portion 33 of the connector 18. Thus, the connector 18 is held in the hood portion 17 in a state in which the dislodgment of the connector 18 is prevented.

As shown in FIGS. 4 and 5, an external electric wire accommodating groove 41 that extends in the longitudinal direction of the resin protector 23 and accommodates the plurality of electric wires 31 is formed at one of the lateral edges of the resin protector 23 that extend in the longitudinal direction. External electric wires 42 to be accommodated in the external electric wire accommodating groove 41 are connected to a member (not shown) that is different from the resin protector 23. A lid 43 is formed at the upper end portion of the side wall of the external electric wire accommodating groove 41 via hinges. By closing the lid 43, the external electric wires 42 accommodated in the external electric wire accommodating groove 41 are covered from above.

### Cover 44

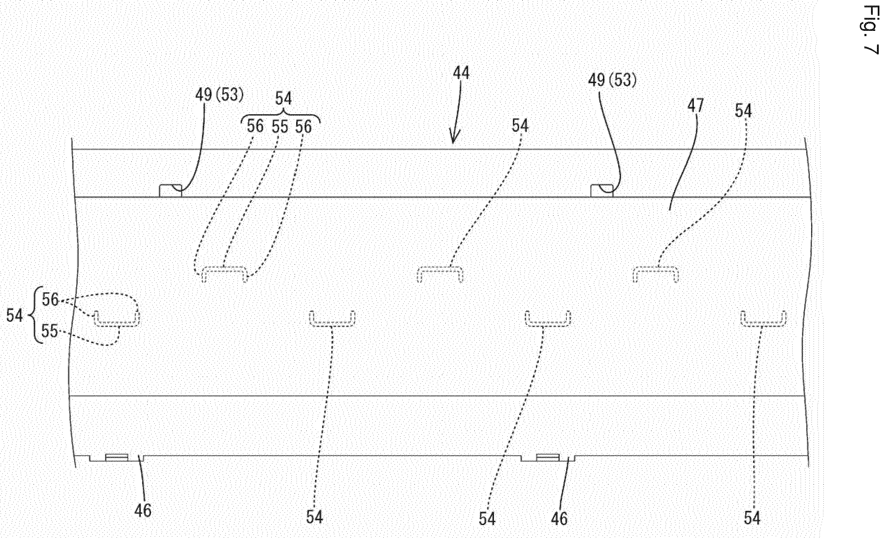

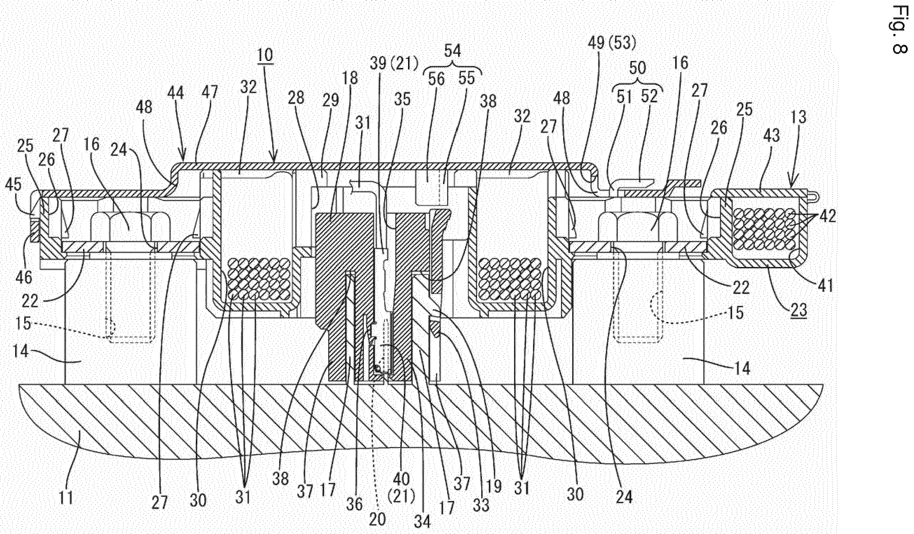

As shown in FIG. 2, a cover 44 made of an insulating synthetic resin is attached to the upper side (a side opposite to the electricity storage element group 12) of the resin protector 23. The opening 26 and so on are covered with the cover 44, and thus the bus bars 22, the electric wires 31 and the connectors 18 are covered from above. As shown in FIG. 7, the cover 44 is formed into an elongate thin plate having a substantially rectangular shape. Cover lock-receiving portions 46 to be elastically locked to cover lock portions 45 are formed at positions corresponding to the cover lock portions 45 formed on the side wall of the resin protector 23 at one lateral edge of a pair of lateral edges of the cover 44 that extends in the longitudinal direction. As shown in FIG. 8, the cover lock portions 45 are formed so as to project toward the outside from the outer surface of the side wall (side wall intersecting a direction toward which the opening 26 is open) of the resin protector 23. Moreover, the cover lock-receiving portions 46 are formed so as to hang down from the lateral edge of the cover 44, and are locked to the cover lock portions 45 from below, thus suppressing the upward dislodgment of the cover 44.

As shown in FIG. 8, the cover 44 has a bulge portion 47 that bulges out upward in the central portion thereof in the left-right direction. Portions between the bulge portion 47 and the both left and right end portions of the cover 44 are formed in a step shape, and serve as bent portions 48 that are bent in the thickness direction of the cover 44.

As shown in FIG. 8, the bent portion 48 on the right side is provided with through holes 49 that penetrate the cover 44. Cover locking portions 50 provided on the upper surface (i.e., the surface on which the opening 26 is formed) of the resin protector 23 are inserted into the through holes 49. The cover locking portions 50 each include a base portion 51 that projects upward (in the direction toward which the opening 26 is open) from the upper surface of the resin protector 23, and a projecting portion 52 that projects and extends toward the direction away from the cover lock portion 45 from the upper end portion of the base portion 51 (toward the direction intersecting the direction toward which the opening 26 is open). In this embodiment, the projecting portions 52 are each formed so as to extend in a direction orthogonal to the longitudinal direction of the resin protector 23. A hole edge portion of the through hole 49 serves as a cover locking-receiving portion 53 that is locked to the cover locking portion 50 in a state in which the cover locking portion 50 is inserted into the through hole 49.

### Connection detection portion 54

As shown in FIG. 8, connection detection portions 54 that are each formed so as to project toward the connectors 18 are formed in one piece with the cover 44 at positions corresponding to the connectors 18 in a state in which the cover 44 is attached to the resin protector 23. The connection detection portion 54 does not interfere with the connector 18 in a state in which the connector 18 is accommodated in the connecting position in the connector accommodating portion 28. The connection detection portion 54 abuts against the connector 18 from above and interferes with the connector 18 in a state in which the connector 18 is not accommodated in the connecting position in the connector accommodating portion 28. It should be noted that the state in which the connector 18 is not accommodated in the connecting position includes a state in which the voltage output terminal 20 of the electricity storage element 11 and the detection terminal 21 of the connector 18 are not electrically connected, and a state in which the connector lock-receiving portion 33 of the connector 18 is not locked to the connector lock portion 19 of the electricity storage element 11 as shown in FIG. 6.

As shown in FIG. 7, the connection detection portions 54 are each formed in a substantially C shape as viewed from above. The connection detection portion 54 includes a longer portion 55 that is formed so as to be relatively long and that extends in the longitudinal direction of the cover 44, and shorter portions 56 that are formed so as to be relatively short and that extend from both end portions of the longer portion 55 in a direction orthogonal to the longitudinal direction of the cover 44 (toward the left side or the right side). The shorter portions 56 suppress the bending and deformation of the longer portion 55. As shown in FIGS. 2 and 8, the longer portion 55 abuts against, from above, a portion of the connector 18 that projects to the highest position.

FIG. 8 shows a state in which the connector 18 is accommodated in the connecting position in the connector accommodating portion 28, that is, a proper fitting state of the connector 18. The connection detection portion 54 does not interfere with the upper end portion of the connector 18 in the state in which the connector 18 is accommodated in the connecting position. This allows the cover lock portion 45 and the cover lock-receiving portion 46 to be locked to each other, thus making it possible to attach the cover 44 to the resin protector 23.

On the other hand, FIG. 6 shows a state in which the connector 18 is not accommodated in the connecting position in the connector accommodating portion 28, that is, a semi-fitting state of the connector 18. In the case where the connector 18 is in the semi-fitting state, the connection detection portion 54 abuts against the upper end portion of the connector 18 from above and interferes with the connector 18. Thereby, the cover lock portion 45 cannot move to the position corresponding to the cover lock-receiving portion 46, and the cover lock portion 45 and the cover lock-receiving portion 46 are not allowed to be locked to each other. As a result, the cover 44 cannot be attached to the resin protector 23, thus making it possible to easily detect that the connector 18 is in the semi-fitting state.

### Operation and effect of this embodiment

Next, the operation and effect of this embodiment will be described. First, an example of a process for assembling the wiring module 13 according to this embodiment is described. It should be noted that the process for assembling the wiring module 13 is not limited to the following description.

First, the bus bars 22 are accommodated in the bus bar accommodating portions 25 in the resin protector 23. The bus bars 22 are held in the bus bar accommodating portions 25 in a state in which the dislodgment of each bus bar 22 is prevented by the bus bar locking claws 27.

Next, the detection terminals 21 connected to the electric wires 31 are accommodated in the cavities 35 of the connectors 18. Then, the connectors 18 are fitted into the connector accommodating portions 28 from above. When the connectors 18 are fitted into the connector accommodating portions 28, the dislodgment preventing portions 29 of the connector accommodating portions 28 prevent the connectors 18 from dislodging upward.

Next, the electric wires 31 guided out from the connectors 18 are accommodated in the electric wire accommodating grooves 30. When being accommodated, the electric wires 31 are accommodated in the electric wire accommodating groove 30 formed on a side opposite to the connector lock-receiving portion 33 of the connector 18 to which those electric wires are connected.

Next, the plurality of electricity storage elements 11 are lined up such that the polarities of the adjacent electrode terminals 14 are different, thus forming the electricity storage element group 12. Next, the surfaces of the electricity storage elements 11 on which the electrode terminals 14 are formed are covered with the wiring module 13 provided with the bus bars 22 and the connectors 18 while aligning the insertion holes 24 of the bus bars 22 with the positions of the electrode terminals 14. Then, the hood portions 17 of the electricity storage elements 11 are disposed in the connector accommodating portions 28.

Next, the bolts 16 for cell connection are screwed into screw holes of the electrode terminals 14 inserted into the bus bars 22. After all the bolts 16 are screwed, the connectors 18 are pushed downward. Before pushing the connectors 18, the detection terminals 21 and the voltage output terminals 20 are not in contact with each other and are not connected to each other. When the connectors 18 are pushed, the tower portions 34 are fitted into the hood portions 17, and the hood portions 17 are received in the gaps 38 between the tower portions 34 and the covering walls 37. When the connectors 18 are pushed to the positions at which the connector lock-receiving portions 33 abut against the connector lock portions 19, the connector lock-receiving portions 33 are bent and deformed toward the outside.

When the connectors 18 are further pushed downward, the connecting tubular portions 40 of the detection terminals 21 in the connectors 18 receive the voltage output terminals 20 located at the corresponding positions. When the connectors 18 are even further pushed, the connector lock-receiving portions 33 are elastically restored, and the connectors 18 are locked to the hood portions 17 (single cells). On the other hand, the connecting tubular portions 40 of the detection terminals 21 in the connectors 18 are brought into contact with the voltage output terminals 20 of the hood portions 17, and the electricity storage element group 12 and the detection terminals 21 for voltage detection are electrically connected.

When the operations for connecting the connectors 18 and the single cells are finished by pushing the connectors 18 downward, the electric wires 31 introduced into the electric wire accommodating grooves 30 are kept in place by the electric wire holding portions 32, and the dislodgment of the electric wires 31 from the electric wire accommodating grooves 30 is restricted (see FIG. 5).

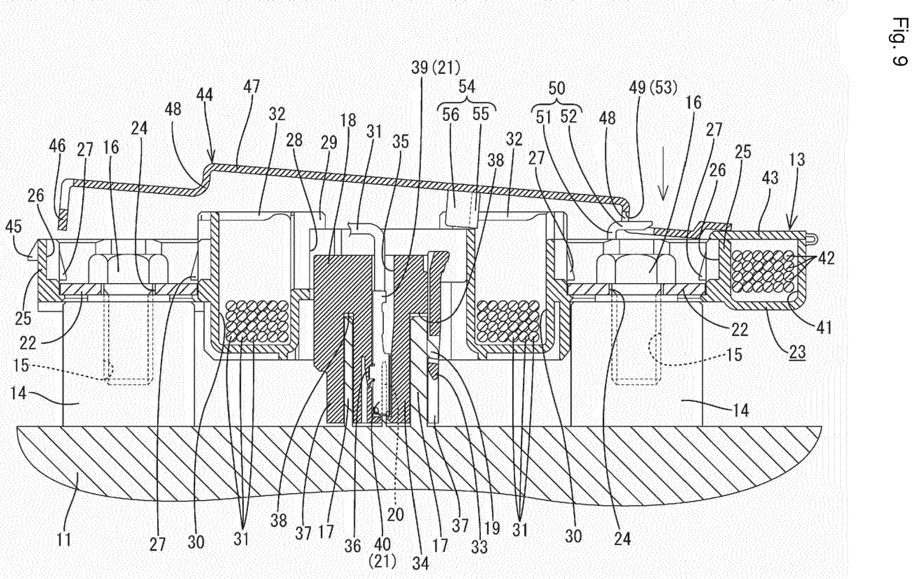

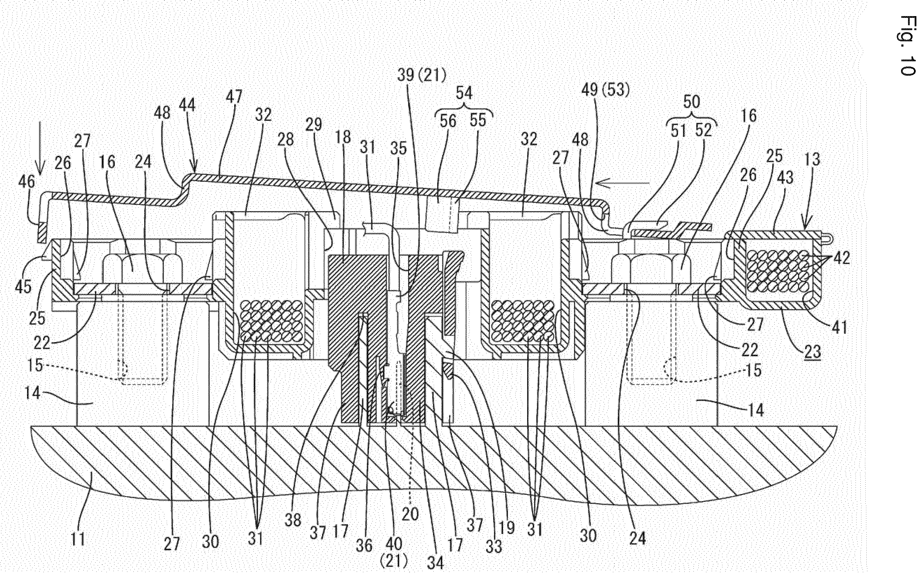

Next, the cover 44 is attached to the upper surface of the wiring module 13 from above (from a side opposite to the electricity storage element group 12). At this time, the cover locking portions 50 are inserted into the through holes 49 (see FIG. 9). Thereafter, the cover 44 is slid to the left side and brought closer to the cover lock portions 45 (see FIG. 10). Thereby, the base portions 51 of the cover locking portions 50 abut against the hole edge portions of the through holes 49 from the left side. Furthermore, the projecting portions 52 of the cover locking portions 50 suppress the upward movement of the cover 44, from above the cover 44 (from a side opposite to the direction toward which the opening 26 is open).

Next, the cover lock-receiving portions 46 are moved downward. When the cover lock-receiving portions 46 abut against the cover lock-receiving portions 46 from above, the cover lock-receiving portions 46 are bent and deformed toward the outside. When the cover lock-receiving portions 46 are further pushed downward, the cover lock-receiving portions 46 are deformed and restored, and the cover lock portions 45 and the cover lock-receiving portions 46 are elastically locked to each other. At this time, the bent portion 48 is bent in the thickness direction of the cover 44, thus making it possible to easily move the cover lock-receiving portions 46 downward.

The cover 44 is attached to the wiring module 13, and thus covers the bus bars 22, the electric wires 31 and the connectors 18 from above. Thereby, the electricity storage module 10 is completed.

As shown in FIG. 8, in a state in which the connectors 18 are held in the connecting positions in the connector accommodating portions 28, the connection detection portions 54 of the cover 44 do not interfere with the upper end portions of the connectors 18. This makes the connection detection portions 54 allow the cover lock portions 45 and the cover lock-receiving portions 46 to be elastically locked to each other.

On the other hand, as shown in FIG. 6, in a state in which the connectors 18 are not held in the connecting positions in the connector accommodating portions 28, the connection detection portions 54 abut against the upper end portions of the connectors 18 from above and interfere with the connectors 18. Then, even when the cover lock-receiving portions 46 are tried to be moved downward, the cover lock-receiving portions 46 cannot be moved to the positions at which the cover lock-receiving portions 46 reach the cover lock portions 45 due to the connection detection portions 54 projecting downward from the cover 44. In the case where the connectors 18 are not held in the connecting positions in the connector accommodating portions 28 in this manner, the connection detection portions 54 do not allow the cover lock portions 45 and the cover lock-receiving portions 46 to be elastically locked to each other. This makes it possible to detect the semi-fitting states of the connectors 18.

As described above, with this embodiment, in the case where the connector 18 is not held in the connecting position, the connection detection portion 54 interferes with the connector 18, thus making it possible to detect a state in which the connector 18 and the electricity storage element 11 are incompletely connected. In particular, the configuration according to this embodiment is effective in the case where the plurality of connectors 18 are disposed so as to be lined up in a state in which the connectors 18 are relatively close to each other.

Furthermore, with this embodiment, it is possible to reliably detect the state in which the connector 18 and the electricity storage element 11 are incompletely connected to each other due to the cover lock portion 45 and the lock-receiving portion not being locked to each other.

With this embodiment, the connection detection portion 54 is formed so as to project toward the connector 18 at the position corresponding to the connector 18. Thus, the connection detection portion 54 reliably interferes with the connector 18 in the state in which the connector 18 and the electricity storage element 11 are incompletely connected to each other. This makes it possible to reliably detect the state in which the connector 18 and the electricity storage element 11 are incompletely connected to each other.

With this embodiment, the connector 18 can be accommodated in the resin protector 23 in the non-connecting position in which the detection terminal 21 and the electricity storage element 11 are separated. This makes it possible to enhance the efficiency of operations for attaching the wiring module 13 to the electricity storage element group 12. The operations for attaching the wiring module 13 to the electricity storage elements 11 are implemented as follows. First, the connector 18 is accommodated in the resin protector 23 in the non-connecting position, and then, the wiring module 13 is attached to the single cell group. Thereafter, the connector 18 and the electricity storage element 11 are connected to each other by accommodating the connector 18 in the connecting position. In this manner, with this embodiment, the connector 18 can be accommodated in the resin protector 23 in the non-connecting position in a state before the resin protector 23 is attached to the single cell group, thus making it possible to enhance the efficiency of the operations for attaching the wiring module 13 to the single cell group compared with a case where the connector 18 is not temporarily held in the resin protector 13.

With this embodiment, the connection detection portion 54 is formed in one piece with the cover 44. This makes it possible to reduce the number of parts of the wiring module 13.

With this embodiment, the detection terminal 21 is configured to detect the voltage of the electricity storage element 11. This makes it possible to use the detection terminal 21 to detect the voltage of the electricity storage element 11.

With this embodiment, the electricity storage element 11 has the electrode terminals 14, and the bus bar 22 for connecting the electrode terminal 14 of one electricity storage element 11 and the electrode terminal 14 of another electricity storage element 11 is accommodated in the resin protector 23. This makes it possible to electrically connect the plurality of electricity storage elements 11 by attaching the wiring module 13 to the electricity storage element group 12.

With this embodiment, the resin protector 23 is provided with the dislodgment preventing portion 29 that holds the connector 18 in a state in which the dislodgment of the connector 18 is prevented. This makes it possible to hold the connector 18 in the connector accommodating portion 28 in a state in which the dislodgment of the connector 18 is prevented even in the case where the connector 18 is accommodated at a position that is different from the connecting position.

### Other embodiments

The present invention is not limited to the embodiment explained by the above description and the drawings. Other embodiments, which will be explained below, for example, are also included in the technical scope of the present invention.
(1) Although the present embodiment has a configuration in which the cover 44 and the resin protector 23 are assembled by the engagement of the cover locking portion 50 and the cover locking-receiving portion 53 and the engagement of the cover lock portion 45 and the cover lock-receiving portion 46, there is no limitation to this. A configuration may be adopted in which the cover 44 is screwed on the resin protector 23.
(2) A configuration may be adopted in which by assembling the cover 44 and the resin protector 23, the connection detection portion 54 presses the connector 18 onto the electricity storage element 11 and thus the connector 18 moves to the connecting position and is held.
(3) Although the present embodiment has a configuration in which the connection detection portion 54 is formed so as to project toward the electricity storage element 11 from the cover 44, there is no limitation to this. The connection detection portion 54 may be formed so as not to project toward the connector 18.
(4) Although the present embodiment has a configuration in which the connection detection portion 54 is formed in one piece with the cover 44, there is no limitation to this. The connection detection portion 54 and the cover 44 may be separately formed.
(5) Although the present embodiment has a configuration in which the four electric wires 31 are guided out from the connector 18, there is no limitation to this. A configuration may be adopted in which one electric wire 31 is guided out from the connector 18 or in which two, three, or five or more electric wires 31 are guided out from the connector 18.
(6) Although the detection terminal 21 according to the present embodiment is configured so as to detect the voltage of the electricity storage element 11, there is no limitation to this. The detection terminal 21 may also detect the current of the electricity storage element 11 or the temperature of the electricity storage element 11. The detection terminal 21 may also be configured so as to detect any state of the electricity storage element 11 as necessary.
(7) The plurality of electricity storage elements 11 may be connected in parallel.
(8) Although the present embodiment has a configuration in which the detection terminal 21 for detecting the voltage of the electricity storage element 11 is connected to the voltage output terminal 20, there is no limitation to this. A configuration may be adopted in which the detection terminal 21 for detecting the temperature of the electricity storage element 11 is connected to a casing of the electricity storage element 11, for example.
(9) Although the electricity storage element 11 is a storage battery in the present embodiment, there is no limitation to this. Any electricity storage element 11 such as an electric double layer capacitor, a lithium ion capacitor or a redox capacitor can be used as necessary.
(10) Although the present embodiment has a configuration in which the bus bar 22 is accommodated in the resin protector 23, there is no limitation to this. A configuration may be adopted in which the bus bar 22 is not accommodated in the resin protector 23. In this case, a configuration may be adopted in which a bus bar accommodating member that accommodates the bus bar 22 is attached to the electricity storage element group 12.
(11) Although the ten electricity storage elements 11 are lined up to form the electricity storage element group 12 in the present embodiment, there is no limitation to this. A configuration may be adopted in which two to nine, or eleven or more electricity storage elements 11 are lined up to form the electricity storage element group 12.
(12) A configuration may be adopted in which the connection detection portion 54 and the cover 44 are separately formed and the connection detection portion 54 is assembled to the cover 44 at a position corresponding to the connector 18.
(13) Although the present embodiment has a configuration in which the connection detection portion 54 does not allow the connector lock portion 19 and the connector lock-receiving portion 33 to be locked to each other in a state in which the connector 18 is not held in the connecting position, a configuration may be adopted in which the connection detection portion 54 allows the connector lock portion 19 and the connector lock-receiving portion 33 to be locked to each other in a state in which the connector 18 is not held in the connecting position. In this case, it is possible to detect the semi-fitting state of the connector due to the cover 44 being deformed so as to bulge out upward in a portion corresponding to the connection detection portion 54.

### List of Reference Numerals

- 11:: Electricity storage element

- 12:: Electricity storage element group
- 13:: Wiring module
- 14:: Electrode terminal
- 18:: Connector
- 21:: Detection terminal
- 22:: Bus bar
- 23:: Resin protector
- 29:: Dislodgment preventing portion
- 44:: Cover
- 45:: Cover lock portion
- 46:: Cover lock-receiving portion
- 54:: Connection detection portion

## Claims

1. A wiring module (13) to be attached to an electricity storage element group (12) obtained by lining up a plurality of electricity storage elements (11), the wiring module (13) comprising:
a connector (18) including a detection terminal (21) to be connected to the electricity storage element (11) and to detect a state of the electricity storage element (11), wherein the connector (18) comprises a connector lock-receiving portion (33) which is lockable with a connector lock portion (19) of the electricity storage element (11);
a resin protector (23) for accommodating the connector (18) in a connecting position in which the detection terminal (21) and the electricity storage element (11) are connected to each other and in which the connector (18) is locked to the electricity storage element (11); and
a cover (44) that is attached to the resin protector (23) to cover the connector (18) and that includes a connection detection portion (54) that does not interfere with the connector (18) in a state in which the connector (18) is accommodated in the connecting position and that interferes with the connector (18) in a state in which the connector (18) is not accommodated in the connecting position.

2. The wiring module (13) according to claim 1,
wherein the resin protector (23) includes a cover lock portion (45) and the cover (44) includes a cover lock-receiving portion (46) that is elastically locked to the cover lock portion (45), and
the connection detection portion (54) allows the cover lock portion (45) and the cover lock-receiving portion (46) to be locked to each other by not interfering with the connector (18) in a state in which the connector (18) is accommodated in the connecting position, and does not allow the cover lock portion (45) and the cover lock-receiving portion (46) to be locked to each other by interfering with the connector (18) in a state in which the connector (18) is not accommodated in the connecting position.

3. The wiring module (13) according to claim 1 or 2,
wherein the connection detection portion (54) is formed so as to project toward the connector (18) at a position corresponding to the connector (18).

4. The wiring module (13) according to any one of claims 1 to 3,
wherein the connector (18) can be accommodated in the resin protector (23) in a non-connecting position in which the detection terminal (21) and the electricity storage element (11) are separated.

5. The wiring module (13) according to any one of claims 1 to 4,
wherein the connection detection portion (54) is formed in one piece with the cover (44).

6. The wiring module (13) according to any one of claims 1 to 5,
wherein the detection terminal (21) is configured to detect a voltage of the electricity storage element (11).

7. The wiring module (13) according to any one of claims 1 to 6,
wherein the electricity storage element (11) has electrode terminals (14), and
a bus bar (22) for connecting the electrode terminal (14) of one electricity storage element (11) and the electrode terminal (14) of another electricity storage element (11) is accommodated in the resin protector (23).

8. The wiring module (13) according to any one of claims 1 to 7,
wherein the resin protector (23) is provided with a dislodgment preventing portion (29) that accommodates the connector (18) in a state in which the dislodgment of the connector (18) is prevented.

## Patentansprüche

1. Verkabelungsmodul (13) zum Anbringen an eine Gruppe elektrischer Speicherelemente (12), die durch Aufreihen mehrerer elektrischer Speicherelemente (11) erhalten wird, wobei das Verkabelungsmodul (13) umfasst:
einen Stecker (18) mit einem Erfassungsanschluss (21) zum Verbinden mit dem elektrischen Speicherelement (11) und zum Erfassen eines Zustands des elektrischen Speicherelements (11), wobei der Stecker (18) einen Steckerverriegelungsaufnahmeabschnitt (33) aufweist, der mit einem Steckerverriegelungsabschnitt (19) des elektrischen Speicherelements (11) verriegelbar ist;
ein Plastikschutzelement (23) zur Aufnahme des Steckers (18) in einer Verbindungsposition, in welcher der Erfassungsanschluss (21) und das elektrische Speicherelement (11) miteinander verbunden sind und in welcher der Stecker (18) mit dem elektrischen Speicherelement (11) verriegelt ist; und
eine Abdeckung (44), die an dem Plastikschutzelement (23) angebracht ist, um den Stecker (18) abzudecken und die einen Verbindungsdetektionsabschnitt (54) aufweist, der den Stecker (18) nicht blockiert, wenn der Stecker (18) in der in der Verbindungsposition aufgenommen ist und der den Stecker (18) blockiert, wenn der Stecker (18) nicht in der Verbindungsposition aufgenommen ist.

2. Verkabelungsmodul (13) gemäß Anspruch 1,
wobei das Plastikschutzelement (23) einen Abdeckungsverriegelungsabschnitt (45) aufweist und die Abdeckung (44) einen Abdeckungsverriegelungsaufnahmeabschnitt (46) aufweist, der elastisch mit dem Abdeckungsverriegelungsabschnitt (45) verriegelt ist, und
der Verbindungsdetektionsabschnitt (54) ein Verriegeln des Abdeckungsverriegelungsabschnitts (45) mit dem Abdeckungsverriegelungsaufnahmeabschnitt (46) ermöglicht, indem der Stecker (18) nicht blockiert ist, wenn der Stecker (18) in der Verbindungsposition aufgenommen ist, und der ein Verriegeln des Abdeckungsverriegelungsabschnitts (45) mit dem Abdeckungsverriegelungsaufnahmeabschnitt (46) nicht zulässt, indem der Stecker (18) blockiert ist, wenn der Stecker (18) nicht in der Verbindungsposition aufgenommen ist.

3. Verkabelungsmodul (13) gemäß Anspruch 1 oder 2,
wobei der Verbindungsdetektionsabschnitt (54) so geformt ist, dass dieser in einer dem Stecker (18) entsprechenden Position zum Stecker (18) hin vorsteht.

4. Verkabelungsmodul (13) gemäß einem der Ansprüche 1 bis 3,
wobei der Stecker (18) in dem Plastikschutzelement (23) in einer unverbundenen Position aufnehmbar ist, in der der Erfassungsanschluss (21) und das elektrische Speicherelement (11) voneinander getrennt sind.

5. Verkabelungsmodul (13) gemäß einem der Ansprüche 1 bis 4, wobei der Verbindungsdetektionsabschnitt (54) mit der Abdeckung (44) aus einem Stück gebildet ist.

6. Verkabelungsmodul (13) gemäß einem der Ansprüche 1 bis 5,
wobei der Erfassungsanschluss (21) dazu eingerichtet ist, eine Spannung des elektrischen Speicherelements (11) zu erfassen.

7. Verkabelungsmodul (13) gemäß einem der Ansprüche 1 bis 6,
wobei das elektrische Speicherelement (11) Elektrodenanschlüsse (14) aufweist, und
eine Sammelschiene (22) zum Verbinden des Elektrodenanschlusses (14) eines elektrischen Speicherelements (11) mit dem Elektrodenanschluss (14) eines weiteren elektrischen Speicherelements (11) in dem Plastikschutzelement (23) aufgenommen ist.

8. Verkabelungsmodul (13) gemäß einem der Ansprüche 1 bis 7,
wobei das Plastikschutzelement (23) einen Abziehschutzabschnitt (29) aufweist, so dass ein Abziehen des Steckers (18) in der aufgenommenen Position verhindert ist.

## Revendications

1. Module de câblage (13) à fixer à un groupe d'éléments de stockage d'électricité (12) obtenu par alignement d'une pluralité d'éléments de stockage d'électricité (11), le module de câblage (13) comprenant :
un connecteur (18) comportant une borne de détection (21) à connecter à l'élément de stockage d'électricité (11) et destinée à détecter un état de l'élément de stockage d'électricité (11), dans lequel le connecteur (18) comprend une partie réceptrice de verrou de connecteur (33) qui peut être verrouillée avec une partie verrou de connecteur (19) de l'élément de stockage d'électricité (11) ;
un élément de protection en résine (23) destiné à loger le connecteur (18) dans une position de connexion, dans laquelle la borne de détection (21) et l'élément de stockage d'électricité (11) sont connectés l'un à l'autre et dans laquelle le connecteur (18) et verrouillé avec l'élément de stockage d'électricité (11) ; et
un couvercle (44) qui est fixé à l'élément de protection en résine (23) pour recouvrir le connecteur (18), et qui comporte une partie de détection de connexion (54) qui ne gêne pas le connecteur (18) dans un état où le connecteur (18) est logé dans la position de connexion et qui gêne le connecteur (18) dans un état où le connecteur (18) n'est pas logé dans la position de connexion.

2. Module de câblage (13) selon la revendication 1,
dans lequel l'élément de protection en résine (23) comporte une partie verrou de couvercle (45) et le couvercle (44) comporte une partie réceptrice de verrou de couvercle (46) qui est verrouillée élastiquement avec la partie verrou de couvercle (45), et
la partie de détection de connexion (54) permet à la partie verrou de couvercle (45) et à la partie réceptrice de verrou de couvercle (46) d'être verrouillées l'une avec l'autre, en ne gênant pas le connecteur (18) dans un état où le connecteur (18) est logé dans la position de connexion, et ne permet pas à la partie verrou de couvercle (45) et à la partie réceptrice de verrou de couvercle (46) d'être verrouillées l'une avec l'autre, en gênant le connecteur (18) dans un état où le connecteur (18) n'est pas logé dans la position de connexion.

3. Module de câblage (13) selon la revendication 1 ou 2,
dans lequel la partie de détection de connexion (54) est formée de manière à faire saillie vers le connecteur (18) à une position correspondant au connecteur (18).

4. Module de câblage (13) selon l'une quelconque des revendications 1 à 3,
dans lequel le connecteur (18) peut être logé dans l'élément de protection en résine (23) dans une position hors connexion, dans laquelle la borne de détection (21) et l'élément de stockage d'électricité (11) sont séparés.

5. Module de câblage (13) selon l'une quelconque des revendications 1 à 4,
dans lequel la partie de détection de connexion (54) est formée d'une seule pièce avec le couvercle (44).

6. Module de câblage (13) selon l'une quelconque des revendications 1 à 5,
dans lequel la borne de détection (21) est conçue pour détecter une tension de l'élément de stockage d'électricité (11).

7. Module de câblage (13) selon l'une quelconque des revendications 1 à 6,
dans lequel l'élément de stockage d'électricité (11) comporte des bornes d'électrodes (14), et
une barre omnibus (22) destinée à connecter la borne d'électrode (14) d'un élément de stockage d'électricité (11) et la borne d'électrode (14) d'un autre élément de stockage d'électricité (11) est logée dans l'élément de protection en résine (23).

8. Module de câblage (13) selon l'une quelconque des revendications 1 à 7,
dans lequel l'élément de protection en résine (23) est pourvu d'une partie anti-délogement (29) qui loge le connecteur (18) dans un état où le délogement du connecteur (18) est empêché.
